# EUROPÄISCHE PATENTANMELDUNG

(11) **EP 2 047 982 A1**
(43) Veröffentlichungstag der Anmeldung: **15.04.2009**
(21) Anmeldenummer: 07019780.1
(22) Anmeldetag: 10.10.2007
(51) Int. Cl.: B32B 15/14, B32B 17/04, E04B 1/94, A62C 2/06

(54) **Flächiges Brandschutzmaterial**

(71) Anmelder: CURESYS AG, 5430 Wettingen (CH)
(72) Erfinder: Dätwiler, Urs, 5405 Dättwil (CH); Fritschi, Markus, 5415 Rieden b. Nussbaumen (CH)
(74) Vertreter: Schaad, Balass, Menzl & Partner AG

(57) **Zusammenfassung**

Das Brandschutzmaterial (10, 20) weist ein Glasfasergewebe (12) auf, welches feuerseitig mit eine reflektierende Schicht (16) versehen ist. Innenseitig beziehungsweise schutzobjektseitig ist das Glasfasergewebe mit einer Wasserdampfsperre (18) versehen. Bevorzugte Ausführungsformen des Bandschutzmaterials (20) weisen zusätzlich zumindest eine feuerfeste Polsterung (22) sowie eine Schicht (24) aus Aramidfasern (26) auf.

## Beschreibung

Die Erfindung betrifft ein flächiges Brandschutzmaterial nach Anspruch 1. Besonders bevorzugte Ausführungsformen des erfindungsgemässen Brandschutzmaterials bilden Gegenstand der abhängigen Ansprüche 2 bis 8.

Löschdecken gehören, wie Feuerlöscher, zu Sicherheitsausrüstungen in Betrieb und Privathaushalt. Die auf dem Markt befindlichen Löschdecken bestehen aus einem Gewebe mit einer feuerhemmenden Imprägnierung. Sie dienen zum Ersticken von bereits vorhandenem Feuer.

Feuerwehrleute benützen Schutzanzüge aus einem feuerhemmenden Material, das gegen Hitzestrahlung und Brandeinwirkung schützt. Beim Material handelt es sich beispielsweise um Aramidfasern, zum Beispiel Nomex.

Der Brandschutz von Kulturgütern wurde bisher hauptsächlich durch bauliche Massnahmen gewährleistet. Dies ist insbesondere, wenn es sich um einzelne Gegenstände handelt, zu aufwendig. Ausserdem sind bauliche Massnahmen nicht immer möglich, beispielsweise beim Transportieren von wertvollen Kulturgütern.

Aufgabe der vorliegenden Erfindung ist es, ein flächiges Brandschutzmaterial vorzuschlagen, welches kostbare Güter, insbesondere Kulturgüter, vor einer Beschädigung durch Brand schützt. Eine weitere Aufgabe der Erfindung ist die Gewährleistung des Brandschutzes an einem beliebigen Ort.

Das erfindungsgemässe, flächige Brandschutzmaterial weist mindestens drei Schichten auf, nämlich ein Glasfasergewebe, das die mechanische Festigkeit und die Formstabilität des flächigen Brandschutzmaterials sichert und gleichzeitig als Träger für die äussere, einer allfälligen Brandeinwirkung zugewandten, reflektierenden Schicht und eine dem zu schützenden Gegenstand zugewandte, innere als Wasser- und Dampfsperre dienende Schicht.

Das erfindungsgemässe flächige Brandschutzmaterial gewährleistet mit der Kombination Glasfasergewebe reflektierende Schicht und Wasser-/Dampfsperre einen Brand- und damit verbundenen Strahlungsschutz und gleichzeitig Schutz gegenüber Löschwasser und den beim Verdampfen des Löschwassers entstehenden Dampf, sowie durch das Feuer entstehenden aggressiven Gasen. Das Brandschutzmaterial kann wie weiter unten gezeigt wird weitere Schichten aufweisen.

Bevorzugte Ausführungsformen werden in den Figuren 1 bis 5 dargestellt.

### Es zeigen rein schematisch

- Fig. 1: einen Schnitt einer ersten Ausführungsform des erfindungsgemässen Brandschutzmaterials;
- Fig. 2: eine Schichtfolge einer zweiten Ausführungsform des erfindungsgemässen Brandschutzmaterials;
- Fig. 2a: einen Schnitt einer feuerseitigen dreischichtigen Lage des erfindungsgemässen Brandschutzmaterials aus Figur 2;
- Fig. 2b: einen Schnitt einer Polsterung des erfindungsgemässen Brandschutzmaterials aus Figur 2;

- Fig. 2c: einen Schnitt einer weiteren Schicht des erfindungsgemässen Brandschutzmaterials aus Figur 2;
- Fig. 3: eine Schichtfolge einer dritten Ausführungsform des erfindungsgemässen Brandschutzmaterials;
- Fig. 3a: einen Schnitt einer feuerseitigen dreischichtigen Lage des erfindungsgemässen Brandschutzmaterials aus Figur 3;
- Fig. 3b: einen Schnitt einer Polsterung des erfindungsgemässen Brandschutzmaterials aus Figur 3;
- Fig. 3c: einen Schnitt einer weiteren Schicht des erfindungsgemässen Brandschutzmaterials aus Figur 3;
- Fig. 4: eine Aussenfläche einer Brandschutzmatte aus einem erfindungsgemässen Brandschutzmaterial; und
- Fig. 5: die der in Figur 4 gezeigten Aussenfläche gegenüberliegende Innenfläche einer Brandschutzmatte aus einem erfindungsgemässen Brandschutzmaterial.

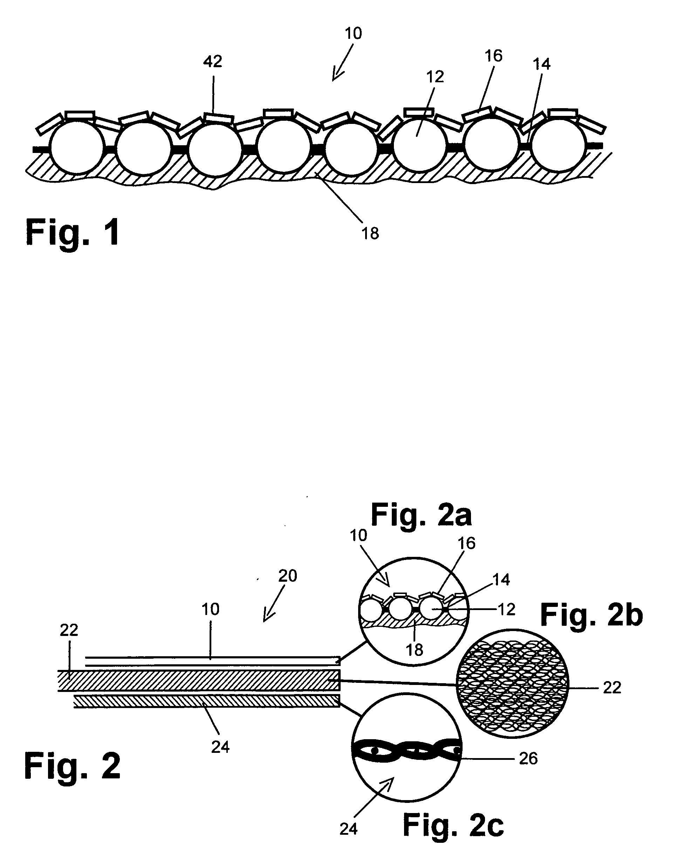

Figur 1 zeigt den Aufbau einer ersten Ausführungsform eines erfindungsgemässen Brandschutzmaterials 10. Ein Glasfasergewebe 12 dient als Trägermaterial für weitere Schichten. Die Verwendung von Glasfasergewebe 12 als Trägermaterial macht das erfindungsgemässe Brandschutzmaterial 10 besonders leicht und bietet gleichzeitig eine hohe Formstabilität und mechanische Festigkeit, wie zum Beispiel Reiss- und Zugfestigkeit. Das Glasfasergewebe 12 ist in der in Figur 1 gezeigten Ausführungsform mit einem Edelstahlfaser 14 verstärkt. Die Edelstahlfaser 14 verbessert die Biegefestigkeit des Brandschutzmaterials 10, da bei Glasfasern eher Biegebrüche auftreten. Feuerseitig ist das Glasfasergewebe 12 mit einer reflektierenden Schicht 16 vorzugsweise aus Aluminium versehen.

Die reflektierende Schicht wird vorzugsweise mittels einer Transferbeschichtung aufgebracht. Durch die Verwendung einer Transferbeschichtung erreicht man eine homogene, glatte Oberfläche der reflektierenden Schicht 16. Es kann so aber auch eine zum Beispiel durch Vorprägung strukturierte reflektierende Schicht 16 aufgebracht werden. Ein weiterer Vorteil der Transferbeschichtung ist, dass die aufgebrachte reflektierende Schicht 16 weniger durch Unebenheiten oder vorstehende freie Faserenden des Glasfasergewebes 12 oder der Edelstahlfäden 14 unterbrochen ist. Dadurch wird eine lückenlose Reflektion der Wärmestrahlung im Brandfall garantiert und die vom Feuer aus gesehen dahinter liegenden Schichten und das Schutzobjekt werden so besser vor Schäden durch zu grosse Hitze geschützt.

Innenseitig beziehungsweise schutzobjektseitig ist das Glasfasergewebe 12 des Brandschutzmaterials 10 mit einer schwer entflammbaren Silikonbeschichtung 18 versehen. Es kann zum Beispiel ein Silikon, welches bis ca. 300°C hitzebeständig ist, verwendet werden. Ein weiterer Vorteil einer Silikonbeschichtung 18 ist, dass selbst bei einer Zersetzung der Silikonbeschichtung 18 keine aggressiven Gase entstehen. Die Silikonbeschichtung dient als Wasser und Dampfsperre.

Da die reflektierende Schicht 16 aus Aluminium ca. 95% der Wärmestrahlung reflektiert und das Glasfasergewebe 12 bis über 1000°C hitzebeständig ist, ist eine erfindungsgemässe Kombination der Schichten, wie in der in Figur 1 gezeigten Ausführungsform des Brandschutzmaterials 10, für einen Einsatz bei sehr hohen Temperaturen wie zum Beispiel bis über 500°C geeignet. Zusätzlich schützt das erfindungsgemässe Brandschutzmaterial 10 ein Schutzobjekt durch die als Wasser- und Dampfsperre wirkende Silikonbeschichtung 18 auch während des Löscheinsatzes vor Wasser und Wasserdampf. Ein weiterer Vorteil der Silikonbeschichtung 18 gemäss der vorliegenden Erfindung ist der Schutz des Schutzobjektes vor agressiven Gasen, welche durch das Feuer entstehen. Das erfindungsgemässe Brandschutzmaterial 10 ist nicht brennbar und erfüllt mindestens die Anforderungen nach DIN 4102 B1 (schwer entflammbar).

Die Figuren 2, 2a, 2b, und 2c zeigen eine weitere Ausführungsform des erfindungsgemässen Brandschutzmaterials 20. Diese Ausführungsform weist fünf Schichten auf. Die feuerseitige, in Figur 2a vergrössert gezeigte, dreischichtige Lage ist mit der in Figur 1 gezeigten Ausführungsform des erfindungsgemässen Brandschutzmaterials 10 identisch. Schutzobjektseitig ist eine weitere Schicht 24 aus Aramidfasern 26 angeordnet. Zwischen der weiteren Schicht 24 und der dreischichtigen Lage ist eine feuerfeste Polsterung 22 angeordnet. Diese feuerfeste Polsterung 22 kann in einer weiteren nicht gezeigten Ausführungsform auch weggelassen werden.

Einerseits dient die in Figur 2b vergrössert gezeigte feuerfeste Polsterung 22 als Schlag-, und Druckschutz des Schutzobjektes. Andererseits erhöht es auch die Isolation des erfindungsgemässen Brandschutzmaterials 20 gegenüber Hitze und die Widerstandsfähigkeit der in Figur 2 gezeigten Ausführungsform des Brandschutzmaterials 20 gegen Feuer. Die feuerfeste Polsterung 22 ist vorzugsweise nicht brennbar oder zumindest schwer entflammbar. Die Dicke der feuerfesten Polsterung 22 beträgt vorzugsweise 5 mm bis 20 mm. Als Material für die feuerfest Polsterung 22 kann ein Flies wie zum Beispiel eine Nadelfilzmatte aus Kohlenstofffasern oder aus Fasern auf Melaminbasis verwendet werden. Ein solches Material zersetzt sich bei Temperaturen über 300°C zu Kohlendioxid oder zu anderen nicht agressiven Gasen. Das so entstehende Kohlendioxid oder Gas dient als Schutzgashülle bzw. Schutzgas für das Schutzobjekt.

Die weitere Schicht 24 aus Aramidfasern 26 erhöht auch die Feuerfestigkeit des Brandschutzmaterials 20. Aramidfasern 26 sind nicht brennbar, sondern zersetzen sich. Zusätzlich bietet die weitere Schicht 24 aus Aramidfasern einen Stich- und Splitterschutz. Die mechanische Festigkeit der Schicht 24 aus Aramidfasern 26, welche in Figur 2c vergrössert gezeigt ist, kann zum Beispiel durch eine Verwebung vorzugsweise im Fischgratmuster erreicht werden. Als Aramidfasergewebe wird vorzugsweise ein Para-Aramidgewebe wie ein Kevlargewebe oder ein Twaronfilamentgewebe verwendet.

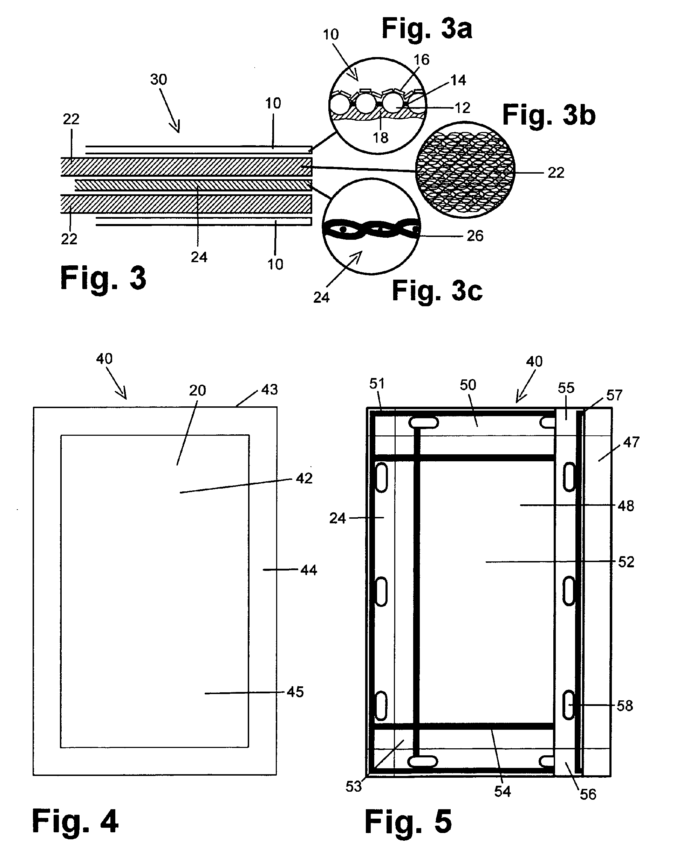

Die Figuren 3, 3a, 3b, 3c zeigen eine dritte Ausführungsform des erfindungsgemässen Brandschutzmaterials 30. Hier sind folgende Schichten von der Feuerseite zur Schutzobjektseite hin angeordnet:
I. eine dreischichtige Lage gemäss der in Figur 1 gezeigten Ausführungsform des erfindungsgemässen Brandschutzmaterials 10 aus Glasfasergewebe 12 mit feuerseitiger reflektierender Schicht 16 und Schutzobjektseitiger Silikonbeschichtung 18,
II. eine feuerfeste Polsterung 22,
III. eine weitere Schicht 24 aus Aramidfasern 26,
IV. eine feuerfeste Polsterung 22 identisch mit II.,
V. eine dreischichtige Lage identisch mit der dreischichtigen Lage I., wobei die reflektierende Schicht 16 Schutzobjektseitig angeordnet ist und eine Silikonbeschichtung 18 feuerseitig am Glasfasergewebe 12 aufgetragen ist.

Durch die wiederholte Anordnung mehrerer Schichten der genannten Materialien verbessern sich die oben beschriebenen Eigenschaften des erfindungsgemässen Brandschutzmaterials 30, insbesondere die Feuerfestigkeit. Der bezüglich einer inneren Ebene des Brandschutzmaterials 30 spiegelsymmetrische Aufbau der dritten Ausführungsform des Brandschutzmaterials 30 hat den weiteren Vorteil, dass im Notfall nicht darauf geachtet werden muss, die richtige Seite zum Feuer hin auszurichten.

Diese Ausführungsform des erfindungsgemässen Brandschutzmaterials 30 eignet sich insbesondere als Material für Verpackungen zum Transport von Schutzobjekten oder zum Vorfertigen von Schutzhüllen für fest verankerte Schutzobjekte.

In weiteren nicht gezeigten Ausführungsformen können noch zusätzliche Schichten aus der feuerfesten Polsterung 22, der weiteren Schichten 24 aus Aramidfasern 26 und dreischichtigen Lagen gemäss dem Brandschutzmaterial 10 aus Figur 1 angeordnet werden, um den Feuerwiderstand des Brandschutzmaterials und somit die Schutzdauer zu erhöhen.

Die dreischichtige Lage gemäss des in Figur 1 gezeigten Brandschutzmaterials 10, die feuerfeste Polsterung 22, und die weitere Schicht 24, sind miteinander verbunden, vorzugsweise verklebt oder vernäht. Zum Vernähen werden vorzugsweise Nomex-Fasern verwendet.

Die Figur 4 zeigt eine zum Feuer hingerichtete Aussenfläche 42 einer rechteckförmigen Brandschutzmatte 40. Die Brandschutzmatte ist in ihrem Innenbereich 45 aus dem in Figur 2 gezeigten Brandschutzmaterial 20 aufgebaut.

Die feuerseitige dreischichtige Lage des Brandschutzmaterials 20 bildet im Randbereich der Brandschutzmatte 40 eine umlaufende, feuerseitige Lasche 44, welche über den Innenbereich 45 umlaufend vorsteht. Die dreischichtige Lage ist über die feuerseitige Lasche 44 durch Umlegen doppelt geführt. Dies verstärkt den feuerseitigen Randbereich der Brandschutzmatte 40. Gleichzeitig werden durch das Umlegen die freien Enden der verschiedenen Schichten der feuerseitigen dreischichtigen Lage an der Kante 43 der feuerseitigen Lasche 44 geschützt.

Die Figur 5 zeigt eine zum Schutzobjekt hingerichtete Innenfläche 48 der rechteckförmigen Brandschutzmatte 40 aus einer weiteren Schicht 24 aus Aramidfasern gemäss dem in Figur 2 gezeigten Brandschutzmaterial 20. Ein Innenbereich 52 der weiteren Schicht 24 aus Aramidfasern ist über die feuerfeste Polsterung mit dem Innenbereich der feuerseitigen Lage verbunden. Die Schicht aus Aramidfasern ragt ebenfalls über den Innenbereich 52 umlaufend hervor und bildet so eine umlaufende schutzobjektseitige Lasche 56.

Auch die weitere Schicht 24 aus Aramidfasern der umlaufenden schutzobjektseitige Lasche 56 ist umgeschlagen und verstärkt so den schutzobjektseitigen Randbereich 50 der Brandschutzmatte 40. Zusätzlich ist die feuerseitige Fläche 55 der schutzobjektseitigen Lasche 56 der Schicht 24 mit einer dreischichtigen Lage gemäss dem in Figur 1 gezeigten Brandschutzmaterial 10 versehen. Diese schützt die feuertechnisch kritischen Fixierungen der Schichten des erfindungsgemässen Brandschutzmaterials an den Rändern der Innenbereiche 45, 52 zusätzlich und verstärkt den Randbereich 50. Durch die Fixierung der feuerseitigen und schutzobjektseitigen Laschen 44, 56 an den Rändern der Innenbereiche 45, 52 bilden die Laschen 44, 56 ein aufklappbares Fach.

Vorzugsweise ist die schutzobjektseitige Lasche 56 umklappbare ausgebildet. Die schutzobjektseitige Lasche 56 kann von der Kante 43 weg auf die Innenfläche 48 geklappt werden. So wird die schutzobjektseitige Fläche 47 der feuerseitigen Lasche 44 in Figur 5 sichtbar. Durch das Umschlagen der dreischichtigen Lage ist die schutzobjektseitige Fläche 47 reflektierend.

Die schutzobjektseitige Lasche 56 weist schutzobjektseitig umlaufend Klettverschlüsse 51 als Befestigungsmittel auf. Ebenso weist der Innenbereich 52 der Innenfläche 48 umlaufende, randseitig, sich annähernd in den Ecken 53 der Innenbereiche 52 überkreuzende weitere Klettverschlüsse 54 auf. Durch umklappen der schutzobjektseitige Lasche 56 wirken die Klettverschlüsse 51 und die weiteren Klettverschlüsse 54 komplementär zueinander und die schutzobjektseitige Lasche 56 kann im umgeklappten Zustand fixiert werden. Dies kann dazu verwendet werden eine Dachlatte oder einen Spanndraht zu umfassen und so die Brandschutzmatte zu befestigen.

Die Klettverschlüsse 51 und die weiteren Klettverschlüsse 54 erlauben es die Brandschutzmatte 40 um ein Schutzobjekt zu fixieren, sowie die modulare Verwendung der Brandschutzmatte 40 beim schnellen Aufbau von Schutzhüllen aus dem erfindungsgemässen Brandschutzmaterial 20. Auch die Fixierung der Innenseiten 44 zweier Brandschutzmatten ist mit Hilfe der Klettverschlüsse 51, 54 möglich, um ein doppelt so dickes und sicheres Brandschutzmaterial zu erhalten.

Die feuerseitige Fläche 55 der schutzobjektseitige Lasche 56 weist ebenfalls einen zusätzlichen Klettverschluss 57 als Befestigungsmittel auf. Dieser kann mit dem Klettverschluss 51 der schutzobjektseitigen Lasche 56 einer weiteren Brandschutzmatte 40 zusammenwirken, so dass zwei Brandschutzmatten 40 aneinander befestigt werden können. Dabei werden die feuerseitige und die schutzobjektseitige Lasche 44 und 56 einer Brandschutzmatte in das Fach der feuerseitigen und der schutzobjektseitigen Lasche 44 und 56 einer weiteren Brandschutzmatte 40 eingesteckt. So lassen sich vorzugsweise zwei bis drei Brandschutzmatten 40 zu einer Brandschutzfläche zusammenfügen. Durch die Auspolsterung in den Innenbereichen 45 der Brandschutzmatten 40 und das einstecken der Laschen 44 56 in das Fach der Laschen 44, 56 der weiteren Bandschutzmatte ergibt sich so eine glatte feuerseitige Gesamtfläche der Brandschutzfläche, welche eine homogene Temperaturbeaufschlagung der feuerseitigen Gesamtfläche gewährleistet.

In den schutzobjektseitigen Laschen 56 sind jeweils Ausnehmungen 58 als Trageelemente bzw. Handgriffelemente zur sichereren Handhabung der Brandschutzmatte 40 ausgebildet. Durch die Ausnehmungen 58 hindurchgreifenden Hände sind durch die feuerseitige Lasche 44 der Brandschutzmatte 40 geschützt. Mit Hilfe der Ausnehmungen 58 können auch Schutzobjekte oder Personen, welche von Brandschutzmatten 40 umhüllt sind, aus einem Gefahrenbereich sicher herausgetragen werden. Die Verstärkung der schutzobjektseitigen Lasche 56 durch eine dreischichtige Lage gemäss dem in Figur 1 gezeigten Brandschutzmaterial 10 verhindert ein Einreissen der Ausnehmungen im Gebrauch als Handgriffelemente.

Brandschutzmatten 40 werden zum Beispiel von Feuerwehren eingesetzt, um ungenügend feuerfeste Öffnungen und Durchdringungen von Gebäuden abzusichern. Dadurch kann ein Brandschutzabschnitt im Brandfall länger aufrechterhalten werden und die Zeit zur Bergung von Personen und Kulturgütern verlängert sich. Für Türöffnungen eignen sich zum Beispiel Brandschutzmatten 40 mit den Aussenmassen 1,30m x 2,10m. Aber auch beliebige andere Aussenmasse sind für verschiedene Einsätze denkbar.

## Patentansprüche

1. Flächiges Brandschutzmaterial (10, 20, 30) **dadurch gekennzeichnet, dass** es ein Glasfasergewebe (12) aufweist, das aussen- oder feuerseitig mit einer reflektierenden Schicht (16) und innenseitig mit einer Wasser/Dampfsperre versehen ist.

2. Brandschutzmaterial (10, 20, 30) nach Anspruch 1, **dadurch gekennzeichnet, dass** es innenseitig eine weitere Schicht (24) aus einer Aramidfaser (26), insbesondere einer Para-Aramidfaser wie Kevlar aufweist.

3. Brandschutzmaterial (10, 20, 30) nach einem der vorangehenden Ansprüche, **dadurch gekennzeichnet, dass** es im Anschluss an die Wasser/Dampfsperre eine Polsterung, insbesondere eine feuerfeste Polsterung (22) aufweist.

4. Brandschutzmaterial (10, 20, 30) nach einem der vorangehenden Ansprüche, **dadurch gekennzeichnet, dass** es in Randbereichen (44,50) verstärkt ist.

5. Brandschutzmaterial (10, 20, 30) nach einem der vorangehenden Ansprüche, **gekennzeichnet durch** die folgenden, von aussen von der Brandseite nach innen, aufeinanderfolgende Schichten a bis e:
a) reflektierende Schicht (16)
Glasfasergewebe (12)
Wasser/Dampfsperre
b) feuerfeste Polsterung (22)
c) weitere Schicht (24) aus Aramidfaser
d) feuerfeste Polsterung (22)
e) Glasfasergewebe (12)
Wasser/Dampfsperre
reflektierende Schicht (16)

6. Brandschutzmaterial (10, 20, 30) nach einem der vorangehenden Ansprüche, **dadurch gekennzeichnet, dass** die reflektierende Schicht (16) eine Aluminiumschicht ist.

7. Brandschutzmaterial (10, 20, 30) nach einem der vorangehenden Ansprüche, **dadurch gekennzeichnet, dass** die Wasser/Dampfsperre eine Silikonbeschichtung (18) ist.

8. Brandschutzmaterial (10, 20, 30) nach einem der vorangehenden Ansprüche, **dadurch gekennzeichnet, dass** das Glasfasergewebe (12) durch Edelstahlfasern (14) verstärkt ist.

9. Brandschutzmaterial (10, 20, 30) nach einem der vorangehenden Ansprüche, **dadurch gekennzeichnet, dass** die Schichten des Brandschutzmaterials (10, 20, 30) miteinander verbunden sind.

10. Brandschutzmatte (40) aus einem Brandschutzmaterial (10, 20, 30) nach einem der vorangehenden Ansprüche, **dadurch gekennzeichnet, dass** die Brandschutzmatte (40) an ihren Randbereichen umlaufend eine feuerseitige und eine schutzobjektseitige Lasche (44,56) aufweist, welche ein aufklappbares Fach bilden und Befestigungsmittel aufweisen.

11. Brandschutzmatte (40) nach Anspruch 10, **dadurch gekennzeichnet, dass** die schutzobjektseitige Lasche (56) Ausnehmungen (58) aufweist.
